# EUROPEAN PATENT APPLICATION

(11) **EP 0 539 339 A1**
(43) Date of publication of application: **28.04.1993**
(21) Application number: 92830575.4
(22) Date of filing: 16.10.1992
(51) Int. Cl.: H02K 5/18, H02K 9/06, F04D 29/44

(54) **Rotating electric machine, particularly an alternator for motor vehicles**

(30) Priority: 23.10.1991 IT TO910794
(71) Applicant: INDUSTRIE MAGNETI MARELLI S.p.A., I-20145 Milano (IT)
(72) Inventor: Annovazzi, Lorella, I-20090 Segrate (Milano) (IT); Arpino, Fabio, I-20133 Milano (IT)
(74) Representative: Quinterno, Giuseppe

(57) **Abstract**

The machine includes a stator core (4) carried by a housing (2) including a pair of support members (6,8) for the bearings (22,24) for the shaft (26) of the rotor (28). The shaft (26) carries a fan (32) for generating a flow of cooling air. At least one of the support members (8) has a plurality of fins (40) for conveying part of the cooling air flow to exhaust apertures (42) formed in the support member (8) in adjacent the bases of the fins (40).

## Description

The present invention relates to a rotating electric machine, particularly an alternator for motor vehicles.

More precisely, the present invention relates to a machine of the type including a stator core carried by a housing including a pair of support members which carry respective bearings for supporting the shaft of the rotor, in which the shaft carries at least one fan for generating a flow of cooling air.

Tests carried out by the Applicant have shown that there is a certain tendency in motor-vehicle alternators for the air to form vortices within the housing which reduce the cooling efficiency. In fact, these vortices reduce the useful exhaust section and thus reduce the flow rate of the cooling air flow. Moreover, the vortices use some of the energy taken by the fan without contributing appreciably to the cooling of the machine.

The object of the present invention is to provide a machine of the type specified above which improves the cooling by reducing the tendency for vortices to form.

According to the present invention, this object is achieved by means of a machine of the type specified above characterised in that at least one of the support members has a plurality of fins adapted to convey some of the air flow towards exhaust apertures formed in the support member adjacent the bases of the fins.

These fins enable some of the cooling air flow to be expelled from zones of the housing in which it is more probable that vortices would form and enable the lines of the cooling air flow to be straightened, considerably reducing the tendency for vortices to form.

Further characteristics and advantages of the present invention will become apparent from the detailed description which follows, given with reference to the appended drawings, provided purely by way of non-limiting example, in which:

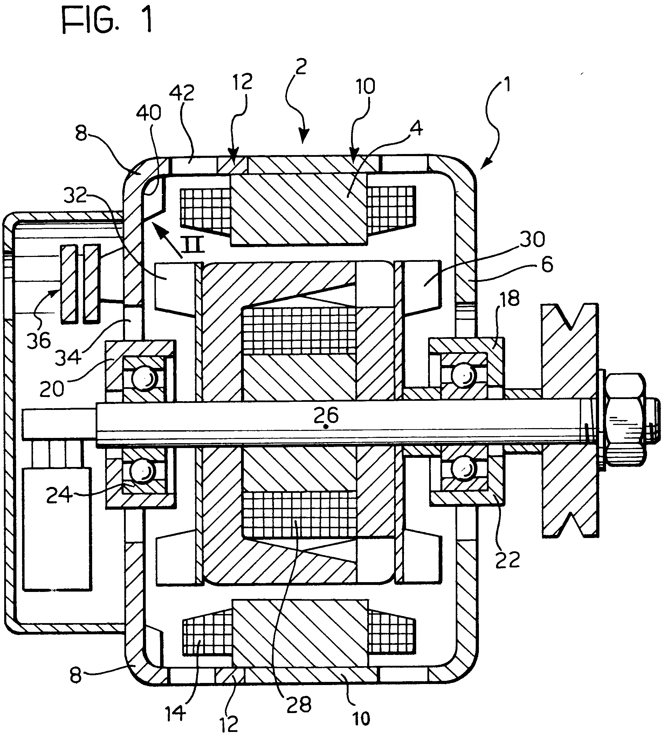

Figure 1 is an axial section through a motor-vehicle alternator according to the present invention;
Figure 2 is an elevational view of the element indicated by the arrow II in Figure 1; and
Figure 3 is a section taken on the line III-III of Figure 2.

An alternator for motor vehicles is indicated 1 and includes a housing 2 carrying a stator core 4. The housing 2 is constituted essentially by two support members 6,8 having respective cylindrical portions 10,12. The support members 6,8 have respective seats 18,20 for the outer bearing rings 22,24 which rotatably support a shaft 26 carrying the rotor 28.

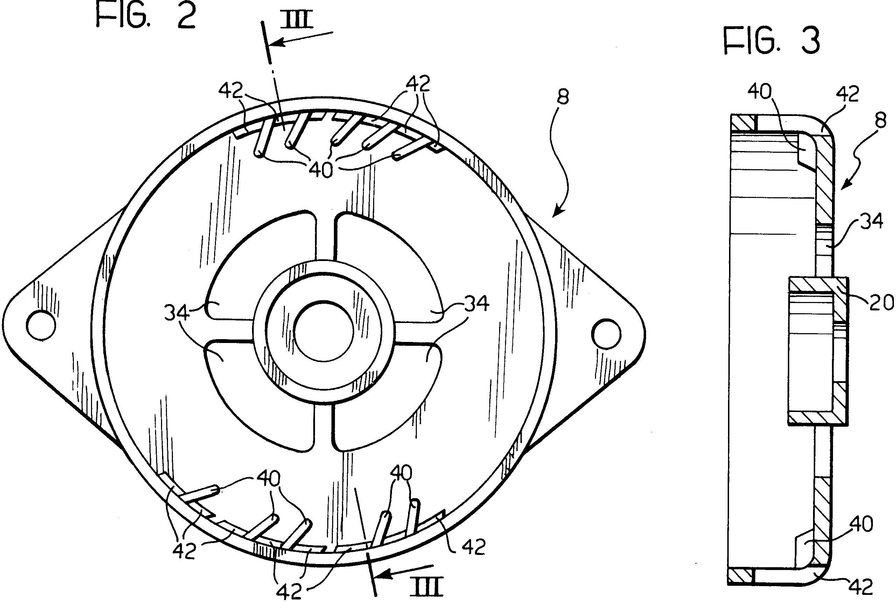

The shaft 26 carries a pair of cooling fans 30,32 adjacent the end surfaces of the rotor 28. The support member 8 facing the fan 32 has a plurality of apertures 34 (see also Figure 2) through which the flow of cooling air produced by the fan 32 is directed on to the diodes 36 constituting a rectifying bridge connected to the stator conductors.

The support member 8 also has a plurality of fins 40 which project from the inner surface of the support member 8. The fins 40 are disposed radially outside the fan 32 and face the circumferential surface of the latter. In a section taken in a plane perpendicular to the axis of rotation of the shaft 26, the fins 40 are inclined in the opposite direction from the blades of the fan 32 (Figure 2).

The support member 8 has a second series of apertures 42 located adjacent the bases of the fins 40.

In operation, part of the flow produced by the fan 32 is conveyed by the fins 40 to the exhaust apertures 42. The presence of the fins 40 and of the corresponding apertures 42 avoids the formation of vortices in correspondence with the heads 14 of the stator 4 and, other conditions being equal, increases the flow rate of the cooling air. The fins 40 and the apertures 42 have the effect of "straightening" the air flow which improves the effectiveness of cooling of the stator head and of the rectifying bridge.

The number of the fins 40 and the number of the blades of the fan 32 must be prime numbers with respect to each other, that is they must not have common divisors so as to avoid acoustic resonance which could cause irrating whistling noises. In the case in question there are ten fins while the fan 32 has eleven blades.

In the description above, the support provided with the fins 40 is the one located closer to the rectifying bridge 36. Alternatively the fins 40 could be provided on the support 6 (that closer to the drive pulley) or on both supports 6,8.

## Claims

1. A rotating electric machine, particularly an alternator for motor vehicles, comprising a stator core (4) carried by a housing (2) including a pair of support members (6,8) which carry respective bearings (22,24) for supporting the shaft (26) of the rotor (28), in which the shaft (26) carries at least one fan (32) for generating a cooling air flow, characterised in that at least one of the support members (8) has a plurality of fins (40) for conveying part of the cooling air flow to exhaust apertures (42) formed in the support member (8) adjacent the bases of the fins (40).

2. A machine according to Claim 1, characterised in that the fins (40) extend axially and project from a surface of the support member (8) which faces inwardly of the housing (2).

3. A machine according to Claim 1, characterised in that the fins (40) are disposed radially outside the fan (32) and, in a direction taken in a plane perpendicular to the shaft (26) of the machine, are inclined in the opposite direction from that of the blades of the fan (32).

4. A machine according to Claim 3, characterised in that the number of fins (40) and the number of blades of the fan (32) do no have a common divisor.
